Europäisches Patentamt

European Patent Office

Office européen des brevets

(11) Veröffentlichungsnummer: **0 307 613 B1**

(12) **EUROPÄISCHE PATENTSCHRIFT**

(45) Veröffentlichungstag der Patentschrift: **26.02.92**

(51) Int. Cl.⁵: **F16L 11/00**

(21) Anmeldenummer: **88112850.8**

(22) Anmeldetag: **06.08.88**

(54) **Profilband aus Kunststoff.**

(30) Priorität: **25.08.87 CH 3254/87**

(43) Veröffentlichungstag der Anmeldung:
**22.03.89 Patentblatt 89/12**

(45) Bekanntmachung des Hinweises auf die
Patenterteilung:
**26.02.92 Patentblatt 92/09**

(84) Benannte Vertragsstaaten:
**AT BE CH DE ES FR GB GR IT LI NL SE**

(56) Entgegenhaltungen:
**WO-A-82/01757**
**US-A- 2 739 089**
**US-A- 3 495 628**

(73) Patentinhaber: **AMETEX AG**
**Eternitstrasse 3**
**CH-8867 Niederurnen(CH)**

(72) Erfinder: **Keldany, Rachid**
**Im Aeglisten 3**
**CH-8124 Maur(CH)**

(74) Vertreter: **Scheidegger, Werner & Co.**
**Siewerdtstrasse 95**
**CH-8050 Zürich(CH)**

# Beschreibung

Die vorliegende Erfindung betrifft ein Profilband aus Kunststoff zur Herstellung von Wickelrohren mit schraubenlinienförmig verlaufender Naht, welches Band zwei parallele Seitenränder mit jeweils einem Längsflansch aufweist, von denen einer einen Steg bildet und der andere eine längsverlaufende Nut aufweist, derart, dass letztere bei gewickeltem Rohr einen Teil eines zugeordneten und darin eingeführten Steges umschliesst.

Die Herstellung von Kunststoffrohren durch schraubenlinienförmiges Wickeln eines Kunststoffbandes der oben beschriebenen Art ist bekannt und beispielsweise in der US-A-3.199.541 oder der DE-A-17 78 201 beschrieben.

Ferner ist aus WO-A-8201757 ein Profilband aus Kunststoff zur Herstellung von Wickelrohren mit schraubenlinienförmig verlaufender Naht bekannt, welches zwei parallele Seitenränder mit jeweils einem Längsflansch aufweist, von denen einer einen Steg bildet und der andere eine längsverlaufende Nut aufweist, derart, dass letztere bei gewickeltem Rohr einen Teil eines zugeordneten und darin eingeführten Steges umschliesst, wobei auf der Bandoberfläche parallel zum genannten Steg eine Längsrippe verläuft, in deren dem Steg zugekehrter Flanke wenigstens eine längsverlaufende, sich seitwärts öffnende Ausnehmung vorgesehen ist und an der Aussenflanke des die Nut aufweisenden Längsflansches wenigstens eine seitwärts abstehende Lippe verläuft, welche dazu vorgesehen ist, bei gewickeltem Rohr und damit in die zugehörige Nut eingeführtem Steg in die zugeordnete Ausnehmung der Längsrippe einzurasten und den so gebildeten Nahtverschluss in Wirklage zu halten.

Ein Problem besteht bei solcherart gebildeten Rohren im zuverlässigen Verschluss der Naht, d.h. im Festhalten des Nahtverschlusses in der gewünschten Wirklage (auch im Betrieb bzw. bei gegebenenfalls unter Druck stehenden Rohren).

Es wurde deshalb vorgeschlagen, die zusammenwirkenden Nahtstellen miteinander zu verschweissen oder zu verkleben. Solche Lösungen vermochten die gestellten Anforderungen, insbesondere auch bezüglich Dichtheit, nicht immer zu erfüllen. Das Problem konnte teilweise mit komplizierten Lösungen, wie z.B. durch Einlegen zusätzlicher Dichtungen, gelöst werden, wobei jedoch damit neue Schwierigkeiten beim Verschweissen entstanden sind.

Eine andere Lösung wurde dann u.a. von der Patentinhaberin vorgeschlagen, wo der mechanische Nahtverschluss mittels eines separaten Verschlussbandes gewährleistet wurde, welches die aneinandergrenzenden Bandränder bzw. die Randflanschen übergreift und welches sich an weiteren Bandrippen abstützt.

Diese Lösung ist zwar technisch überzeugend, jedoch mit einem gewissen Aufwand verbunden (zusätzliches Verschlussband).

Aufgabe der vorliegenden Erfindung war es somit, die bestehenden Probleme durch eine konstruktiv einfachere und noch sicherere Ausgestaltung des Wickelbandes zu lösen.

Diese Aufgabe wurde bei einem Profilband der eingangs definierten Art mit den Merkmalen des Anspruchs 1 gelöst, wobei auf der Bandoberfläche parallel zum genannten Steg eine Längsrippe verläuft, in deren dem Steg zugekehrter Flanke wenigstens eine längsverlaufende, sich seitwärts öffnende Ausnehmung vorgesehen ist und an der Aussenflanke des die Nut aufweisenden Längsflansches wenigstens eine seitwärts abstehende Lippe verläuft, welche dazu vorgesehen ist, bei gewickeltem Rohr und damit in die zugehörige Nut eingeführtem Steg in die zugeordnete Ausnehmung der Längsrippe einzurasten und den so gebildeten Nahtverschluss in Wirklage zu halten, und zwischen dem Boden der Nut und der Stirnfläche des freien Endes des Steges ein längsverlaufendes Element vorgesehen ist, welches mit dem Boden der Nut oder der Stirnfläche des Steges verbunden ist und aus einem Material besteht, welches im Vergleich zum übrigen Bandmaterial eine höhere Elastizität bzw. elastische Verformbarkeit besitzt, um bei in die Nut eingesetztem Steg elastisch gegen die Gegenfläche anzuliegen und eine Dichtung zu bilden.

Bei einer besonderen Ausführungsform des Bandes weist die Lippe zwei Flanken auf, von denen die obere, die zur Anlage an eine Seitenwand der Ausnehmung in der Längsrippe vorgesehen ist, im wesentlichen parallel zur Bandfläche und die andere, die zur Anlage an einen Bereich der Flanke der Längsrippe vorgesehen ist, bezüglich der Bandfläche geneigt verläuft. Bei dieser Ausführungsform ist es zweckmässig, dass der genannte Flankenbereich der Längsrippe aus einem Material besteht, welches im Vergleich zum übrigen Bandmaterial eine höhere elastische Verformbarkeit besitzt, um eine eingesetzte Lippe elastisch gegen die Seitenwand der Ausnehmung anzudrücken und gleichzeitig eine Dichtung zu bilden.

Vorzugsweise sind an der Aussenflanke des die Nut aufweisenden Längsflansches zwei Lippen und in der dem Steg zugekehrten Flanke der Längsrippe zwei den Lippen zugeordnete längsverlaufende Ausnehmungen vorgesehen.

Die erfindungsgemässe Ausbildung des Profilbandes ermöglicht nicht nur das dichte Verschliessen der Naht, sondern auch deren zusätzliche Sicherung, ohne dass dazu neben dem Band selbst noch zusätzliche Konstruktionsteile erforderlich wären, wobei auch ohne zusätzliche Mittel die Dichtheit des Nahtverschlusses gewährleistet ist.

Das Material, das eine höhere elastische Verformbarkeit aufweist als das übrige Bandmaterial, wird durch Koextrusion mit dem übrigen Bandmaterial aufgebracht.

Die Erfindung wird nachstehend anhand eines in der Zeichnung dargestellten Ausführungsbeispiels noch etwas näher erläutert. Es zeigt:

Fig. 1 einen Querschnitt durch ein Kunststoff-Profilband, welches erfindungsgemäss ausgestaltet ist;

Fig. 2 und 3 vergrösserte Ausschnitte aus Fig. 1, welche die Querschnitte durch die seitlichen Längsflansche verdeutlichen;

Fig. 4 ebenfalls vergrössert, einen Schnitt durch den Nahtverschluss eines Wickelrohres, und

Fig. 5 eine Variante eines Profilbandes nach der Erfindung (Querschnitt).

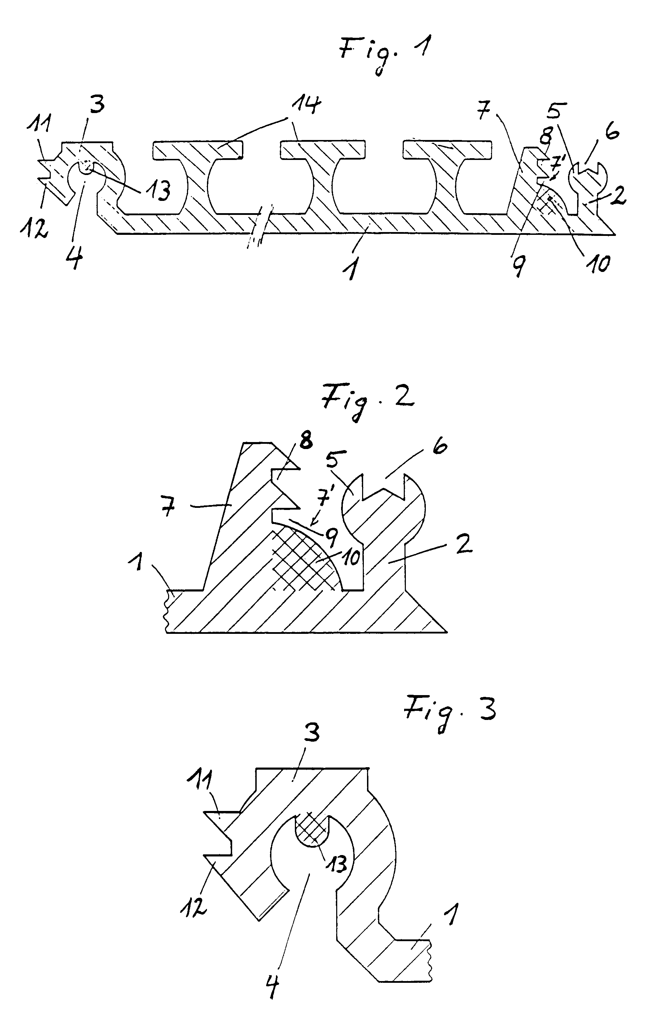

Das in der Zeichnung (Fig. 1) gezeigte Profilband 1 aus Kunststoff weist entlang eines Seitenrandes einen längsverlaufenden Steg 2 und entlang des anderen Seitenrandes in einem Längsflansch 3 eine Nut 4 auf, welche dazu vorgesehen ist, bei einem aus dem Band 1 gewickelten Rohr einen Teil eines zugeordneten bzw. benachbarten Steges 2 zu umschliessen.

Der Steg 2 weist am oberen freien Ende eine im Querschnitt etwa kreisförmige Verdickung 5 auf, welche mit einer längsverlaufenden Nut 6 versehen ist. Parallel zum Steg 2 verläuft eine Längsrippe 7, welche auf ihrer dem Steg 2 zugekehrten Flanke 7' zwei längsverlaufende, sich seitwärts öffnende Ausnehmungen 8,9 aufweist.

Der konvex bombierte untere Abschnitt 10 der Rippenflanke 7' besteht aus einem Material, welches im Vergleich zum übrigen Bandmaterial wesentlich elastischer ist, d.h. eine wesentlich grössere elastische Verformbarkeit besitzt.

Am andern Längsflansch 3 mit der Nut 4, welche im Querschnitt im wesentlichen der Verdickung 5 des Steges 2 entspricht, sind zwei seitwärts abstehende Lippen 11, 12 angeformt, welche in Ausnehmungen 8,9 einer Längsrippe 7 passen. Am Grund der Nut 4 ist ein längsverlaufender Wulst 13 vorgesehen, welcher wie die Abschnitt 10 der Längsrippe 7 aus einem Material besteht, das wesentlich weicher und elastisch verformbarer ist als das übrige Bandmaterial.

Der Bereich 10 der Längsrippe 7 und der Wulst 13 im Steg 3 sind übrigens bei der Bandherstellung durch Koextrusion entstanden.

Zwischen den beiden seitlichen Längsflanschen 2 und 3 weist das Band 1 auf der Oberseite noch eine Reihe weiterer, im Querschnitt z.B. T-förmigen Verstärkungsrippen 14 auf. Die Zwischenräume zwischen den Rippen 14 können beim gebildeten Rohr z.B. mit einer erhärtenden Masse (Mörtel) gefüllt werden.

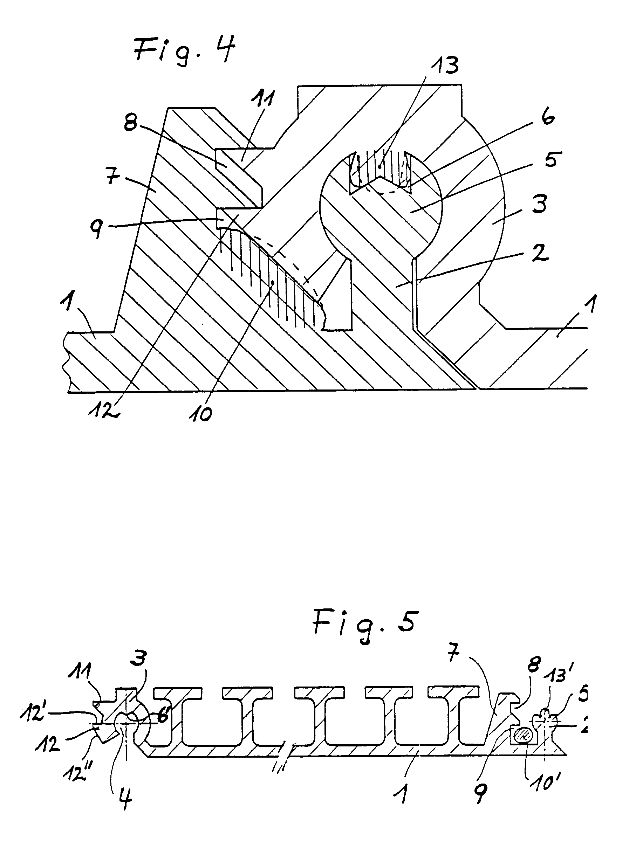

Fig. 4 der Zeichnung illustriert das Zusammenwirken von Steg 2, Längsflansch 3 mit Nut 4, der Längsrippe 7 mit Ausnehmungen 8,9 und der Lippen 11, 12, welche in die Ausnehmungen 8, 9 einrasten und dafür sorgen, dass ein gebildeter Nahtverschluss auch im Betrieb (z.B. unter Druck) in Wirklage verbleibt. Die beiden Längsflanschen 2, 3 könnten auch noch miteinander verschweisst oder verklebt werden (z.B. mittels Ultraschall-Schweissung).

Fig. 4 illustriert auch, wie dank der sich bei zusammengefügten Längsflanschen verformten Abschnitte 10 bzw. Teile 13 eine bei bisherigen Konstruktionen undenkbare Dichtwirkung erzielt wird. Weiter wird durch den elastisch verformten Abschnitt 10 der Längsrippe 7 der Flansch 3 bzw. dessen Lippen 11, 12 an die zugeordneten Anschlagflächen in den Ausnehmungen 8, 9 gedrückt und so ein sicherer Verschluss gewährleistet. Dadurch wird auch ein Verkleben oder Verschweissen an sich überflüssig und wird nur noch als Zusatzmassnahme angewendet.

Fig. 5 der Zeichnung zeigt im Querschnitt eine Variante eines Profilbandes nach der Erfindung.

Das Kunststoffband 1 ist grundsätzlich gleich ausgestaltet wie das Band nach Fig. 1-4, und es besitzt insbesondere einen Steg 2 mit einer Verdickung 5 am einen Rand, während am anderen Rand ein Längsflansch 3 mit Nut 4 vorgesehen ist.

Die Rippe 7 weist auf der dem Steg 2 zugekehrten Flanke 7' ebenfalls zwei sich seitwärts öffnende Ausnehmungen 8,9 auf, in welche zwei vom Steg 2 abstehende Lippen 11,12 einrasten können (bei verschlossener Naht).

Am freien oberen Ende (Stirnfläche) des Steges 2 ist eine Dichtleiste 13' aus elastischem Material vorgesehen, welche sich bei geschlossener Naht gegen den Boden der Nut 4 dichtend anlegt. Die Dichtleiste 13' wird vorzugsweise mit dem Profilband koextrudiert. Sie könnte auch in eine kleine Vertiefung eingelegt und z.B. aufvulkanisiert sein.

Anstelle des elastischen Flankenbereiches 10 ist in der Ausnehmung 9 ein längsverlaufendes Dichtungselement 10' vorgesehen, welches bei geschlossener Naht die Dichtheit noch weiter verbessert (und den Verschluss in der optimalen Stellung zuhält).

**Patentansprüche**

1. Profilband aus Kunststoff zur Herstellung von Wickelrohren mit schraubenlinienförmig verlaufender Naht, welches Band (1) zwei parallele Seitenränder mit jeweils einem Längsflansch aufweist, von denen einer einen Steg (2) bildet und der andere eine längsverlaufende Nut (4) aufweist, derart, dass letztere (4) bei gewickeltem Rohr einen Teil eines zugeordneten und darin eingeführten Steges (2) umschliesst, wobei auf der Bandoberfläche parallel zum genannten Steg (2) eine Längsrippe (7) verläuft, in deren dem Steg (2) zugekehrter Flanke (7') wenigstens eine längsverlaufende, sich seitwärts öffnende Ausnehmung (8;9) vorgesehen ist und an der Aussenflanke des die Nut (4) aufweisenden Längsflansches (3) wenigstens eine seitwärts abstehende Lippe (11;12) verläuft, welche dazu vorgesehen ist, bei gewikkeltem Rohr und damit in die zugehörige Nut (4) eingeführtem Steg (2) in die zugeordnete Ausnehmung (8;9) der Längsrippe (7) einzurasten und den so gebildeten Nahtverschluss in Wirklage zu halten, bei welchem Band (1) zwischen dem Boden der Nut (4) und der Stirnfläche des freien Endes des Steges (2) ein längsverlaufendes Element (13;13') vorgesehen ist, welches mit dem Boden der Nut (4) oder der Stirnfläche des Steges (2) verbunden ist und aus einem Material besteht, welches im Vergleich zum übrigen Bandmaterial eine höhere Elastizität bzw. elastische Verformbarkeit besitzt, um bei in die Nut (4) eingesetztem Steg (2) elastisch gegen die Gegenfläche anzuliegen und eine Dichtung zu bilden.

2. Profilband nach Anspruch 1, dadurch gekennzeichnet, dass am Boden der Nut (4) ein längsverlaufender Wulst (13) aus einem Material vorgesehen ist, welches im Vergleich zum übrigen Bandmaterial eine höhere Elastizität bzw. elastische Verformbarkeit besitzt, um bei in die Nut (4) eingesetztem Steg (2) elastisch gegen die Begrenzung der Stirnfläche des Steges (2), gegebenenfalls an die Begrenzungen einer darin vorgesehenen längsverlaufenden Ausnehmung (6) anzuliegen und eine Dichtung zu bilden.

3. Profilband nach Anspruch 1, dadurch gekennzeichnet, dass an der Strinfläche des Steges (2) ein längsverlaufender Wulst (13') aus elastischem Material vorgesehen ist, um bei in die Nut (4) eingesetztem Steg (2) elastisch gegen den gegebenenfalls mit einer Erhöhung (6') versehenen Boden der Nut (4) anzuliegen und eine Dichtung zu bilden.

4. Profilband nach einem der Ansprüche 1-3, dadurch gekennzeichnet, dass die Lippe (12) zwei Flanken (12';12") aufweist, von denen die obere (12'), die zur Anlage an eine Seitenwand der Ausnehmung (9) in der Längsrippe (7) vorgesehen ist, im wesentlichen parallel zur Bandfläche und die andere (12"), die zur Anlage an einen Bereich (10) der Flanke (7') der Längsrippe (7) oder ein daran anliegendes elastisches Dichtungselement (10') vorgesehen ist, bezüglich der Bandfläche geneigt verläuft.

5. Profilband nach Anspruch 4, dadurch gekennzeichnet, dass der genannte Flankenbereich (10) der Längsrippe (7) aus einem Material besteht, welches im Vergleich zum übrigen Bandmaterial eine höhere elastische Verformbarkeit besitzt, um eine eingesetzte Lippe (11;12) elastisch gegen die Seitenwand der Ausnehmung (8;9) anzudrücken und gleichzeitig eine Dichtung zu bilden.

6. Profilband nach Anspruch 2, dadurch gekennzeichnet, dass die zur Aufnahme eines Wulstes (13) in der Stirnfläche des Steges (2) vorgesehene Ausnehmung (6) als hinterschnittene Nut ausgebildet ist.

7. Profilband nach einem der Ansprüche 1-6, dadurch gekennzeichnet, dass an der Aussenflanke des die Nut (4) aufweisenden Längsflansches (3) zwei Lippen (11; 12) und in der dem Steg (2) zugekehrten Flanke (7') der Längsrippe (7) zwei den Lippen (11;12) zugeordnete längsverlaufende Ausnehmungen (8;9) vorgesehen sind.

8. Profilband nach Anspruch 4 und 5, dadurch gekennzeichnet, dass der zur Anlage an die eine Lippenflanke vorgesehene Bereich (10) der Flanke der Längsrippe (7) in unbelastetem Zustand konvex bombiert ist, um sich beim Einsetzen einer Lippe (11;12) zu verformen und sich gegen die eine Flanke letzterer elastisch anzulegen.

**Claims**

1. A profiled plastic band for the production of wound pipes having a helically extending seam, which band (1) includes two parallel side edges each having one respective longitudinal flange of which one forms a web (2) and the other includes a longitudinally extending groove (4), such that in the wound condition of the pipe said groove (4) embraces a section of a web (2) allocated thereto and inserted thereinto, whereby a longitudinal rib (7) extending on the surface of the band parallel to said web (2) and including in its flank (7') facing said web (2) at least one longitudinally extending and laterally open recess (8;9); and comprising at least one lip (11;12) extending at and along the outer flank of the longitudinal flange (3) which includes said groove (4), and projecting laterally therefrom, intended to snap in case of said web (2) having been inserted into its corresponding groove (4) at the wound condition of the completed tube into the corresponding recess (8;9) in said longitudinal rib (7) whereby the locked seam formed thereby is kept in its operational position, said band (1) comprising further a longitudinal extending member (13;13') located between the bottom of said groove (4) and the face surface of the free end of said web (2) and which is connected to the bottom of said groove (4) or the face surface of said web (2) and consists of a material which in comparison with the remainder of the material of the band features a higher elasticity or elastic deformability respectively, such that upon said web (2) having been inserted into said groove (4) said member abuts elastically the opposite surface such to form a seal.

2. The profiled plastic band of claim 1, characterized in that a longitudinally extending bead (13) is provided at the bottom of the groove (4) and consisting of a material which in comparison with the remainder of the material of the band features a higher elasticity or elastic deformability, such that upon said web (2) having been inserted into said groove (4) said bead abuts elastically the border of the face surface of said web (2) or optionally the limits of a longitudinally extending recess (6) provided therein such to form a seal.

3. The profiled plastic band of claim 2, characterized in that a longitudinally extending bead (13') of an elastic material is provided at the face surface of said web (2) such that upon said web (2) having been inserted into said groove (4) said bead abuts elastically the bottom of said groove (4), optionally provided with a projection (6'), such to form a seal.

4. The profiled plastic band according to any of claims 1-3, characterized in that said lip (12) comprises two flanks (12';12") of which the upper one (12') which is intended to abut one side wall of said recess (9) in said longitudinally extending rib (7) extends substantially parallel to the band surface and the other one (12") which is intended to abut one area (10) of the flank (7') of said longitudinally extending rib (7) or an elastic sealing member (10') abutting thereonto extends inclined relative to the band surface.

5. The profiled plastic band of claim 4, characterized in that said flank area (10) of said longitudinal rib (7) consists of a material which in comparison with the remainder of the material of the band features a higher elastic deformability such to press an inserted lip (11;12) elastically against a side wall of said recess (8,9) and to simultaneously form a seal.

6. The profiled plastic band of claim 2, characterized in that said recess (6) intended to receive a bead (13) in the face surface of said web (2) is shaped as an undercut groove.

7. The profiled plastic band according to any of claims 1-6, characterized in that two lips (11;12) are provided at the outer flank of the longitudinal flange (3) which includes said groove (4) and in which two longitudinally extending recesses (8;9) are provided at the flank (7') of the longitudinal rib (7) facing said web (2) which recesses are provided for receiving said lips.

8. The profiled plastic band of claims 4 and 5, characterized in that said area (10) of the flank of the longitudinal rib (7) which is intended to abut one of the flanks of the lip is bulged convexly in its not leaded condition such to deform upon insertion of a lip (11;12) and to elastically abut against a flank of latter.

**Revendications**

1. Bande profilée en matière plastique destinée à la fabrication de tubes enroulés ayant une ligne de joint en hélice, ladite bande (1) présentant deux bords latéraux parallèles ayant chacun une collerette longitudinale dont l'une forme une languette (2) et l'autre présente une rainure longitudinale (4) tel que dans un tube enroulé la rainure (4) enferme une partie d'une languette (2) correspondante qui y a été introduite, une nervure (7) étant prévue sur la surface de la bande s'étendant parallèlement à ladite languette (2) et présentant dans son flanc (7') en face de la languette (2) au moins un évidement longitudinal (8;9) s'ouvrant latéralement et le flanc extérieur de la collerette longitudinale (3) présentant la rainure (4) étant muni d'une lèvre (11;12) s'étendant latéralement, cette lèvre étant destinée, dans un tube enroulé et donc avec la languette (2) introduite dans la rainure (4) correspondante, à encliqueter dans l'évidement correspondant (8;9) de la nervure (7) pour ainsi verrouiller la fermeture de joint ainsi formée, la bande (1) étant muni d'un élément (13;13') s'étendant longitudinale entre le fond de la rainure (4) et la face frontale de l'extrémité libre de la languette (2) tout en étant relié avec le fond de la rainure (4) ou avec la face frontale de la languette (2) et étant formé d'un matériau ayant une élasticité ou déformabilité élastique plus élevée que le reste du matériau de la bande, pour s'appuyer élastiquement contre la surface opposée et ainsi former un joint étanche lorsque la languette (2) est introduite dans la rainure (4).

2. Bande profilée selon la revendication 1, caractérisée par un bourrelet longitudinal (13) au fond de la rainure (4) en matériau ayant une élasticité ou déformabilité élastique plus élevée que le reste du matériau de la bande pour s'appuyer élastiquement contre la délimitation de la face frontale de la languette (2) ou contre la délimitation d'un creux (6) longitudinal dans ladite face et ainsi former un joint étanche lorsque la languette (2) est introduite dans la rainure (4).

3. Bande profilée selon la revendication 1, caractérisée en ce que la face frontale de la languette (2) présente un bourrelet longitudinal (13') en un matériau élastique pour venir s'appuyer élastiquement contre le fond de la rainure (4), qui peut être muni d'une bosse (6'), et ainsi former un joint étanche lorsque la languette (2) est introduite dans la rainure (4).

4. Bande profilée selon l'une des revendications 1-3, caractérisée en ce que la lèvre (12) présente deux flancs (12';12"), dont le flanc supérieur (12') destiné à venir en contact avec une face latérale de l'évidement (9) dans la nervure longitudinale (7) s'étend sensiblement parallèlement à la surface de la bande et l'autre flanc (12"), destiné à venir en contact avec une zone (10) du flanc (7') de la nervure longitudinale (7) ou avec un élément de joint élastique (10') s'appuyant contre le flanc (7'), est incliné par rapport à la surface de la bande.

5. Bande profilée selon la revendication 4, caractérisée en ce que la zone (10) du flanc de la nervure longitudinale (7) est en un matériau présentant une déformabilité élastique plus élevée comparé au reste du matériau de la bande, pour appuyer une lèvre (11;12) introduite élastiquement contre la face latérale de l'évidement (8;9) et former simultanément un joint étanche.

6. Bande profilée selon la revendication 2, caractérisée en ce que le creux (6) prévu dans la face frontale de la languette (2) et destiné à recevoir un bourrelet (13) présente la forme d'une rainure en dépouille.

7. Bande profilée selon l'une des revendications 1-7, caractérisée en ce que le flanc extérieur de la collerette (3) munie de la rainure (4) présente deux lèvres (11;12) et en ce que le flanc (7') en face de la languette (2) de la nervure (7) présente deux évidements (8;9) longitudinaux destinés à recevoir les lèvres (11;12).

8. Bande profilée selon les revendications 4 et 5, caractérisée en ce que la zone (10) du flanc de la nervure (7) destinée à venir en contact avec un flanc de la lèvre présente à l'état non chargé un forme convexe, pour se déformer lorsqu'une lèvre (11;12) est introduite et pour s'appuyer élastiquement contre le flanc de cette lèvre.

Fig. 1

Fig. 2

Fig. 3

Fig. 4

Fig. 5